# EUROPÄISCHE PATENTSCHRIFT

(11) **EP 2 782 717 B1**
(45) Veröffentlichungstag und Bekanntmachung des Hinweises auf die Patenterteilung: **21.08.2019**
(21) Anmeldenummer: 12786936.0
(22) Anmeldetag: 07.11.2012
(51) Int. Cl.: B25H 3/02, H02J 7/00

(54) **HANDWERKZEUGKOFFERHALTEVORRICHTUNG**
HOLDING DEVICE FOR THE CASING OF A HAND-HELD TOOL
DISPOSITIF DE FIXATION POUR MALLETTE D'OUTIL À MAIN

(30) Priorität: 22.11.2011 DE 102011086800
(43) Veröffentlichungstag der Anmeldung: 01.10.2014
(73) Patentinhaber: Robert Bosch GmbH, 70442 Stuttgart (DE)
(72) Erfinder: REJMAN, Marcin, 71332 Waiblingen (DE); MACK, Juergen, 73035 Goeppingen (DE); DIETZEL, friederike, 70442 Stuttgart (DE)
(86) Internationale Anmeldenummer: PCT/EP2012/072023
(87) Internationale Veröffentlichungsnummer: WO 2013/075945

(56) Entgegenhaltungen:
- EP-A1- 1 563 965
- WO-A1-2011/103635
- KR-A- 20110 107 728
- US-A1- 2010 013 432
- US-B1- 6 218 796

## Beschreibung

### Stand der Technik

Es ist bereits eine Handwerkzeugkofferhaltevorrichtung mit einem Haltevorrichtungsgehäuse, einem Kofferaufnahmebereich und zumindest einer Ladespule, die dazu vorgesehen ist, in eine Richtung senkrecht zu einer Ladefläche des Haltevorrichtungsgehäuses eine Energie in den Kofferaufnahmebereich zu übertragen, vorgeschlagen worden. Beispiele sind aus der KR1020110107728A und EP1563965A1 bekannt.

### Offenbarung der Erfindung

Die Erfindung geht aus von einer Handwerkzeugkofferhaltevorrichtung mit einem Haltevorrichtungsgehäuse, einem Kofferaufnahmebereich und zumindest einer Ladespule, die dazu vorgesehen ist, in eine Richtung zumindest im Wesentlichen senkrecht zu einer Ladefläche des Haltevorrichtungsgehäuses eine Energie in den Kofferaufnahmebereich zu übertragen.

Es wird vorgeschlagen, dass das Haltevorrichtungsgehäuse eine Kofferstützfläche aufweist, die dazu vorgesehen ist, eine Stützkraft zumindest im Wesentlichen parallel zu der Ladefläche zu bewirken. Unter einem "Haltevorrichtungsgehäuse" soll eine Einheit verstanden werden, die in einem betriebsbereiten Zustand eine auf die Kofferstützfläche wirkende Kraft abstützt. Vorzugsweise verbindet ein Teil des Haltevorrichtungsgehäuses die Ladespule, die Ladefläche und die Kofferstützfläche miteinander. Vorzugsweise umschließt das Haltevorrichtungsgehäuse einen Innenraum, in dem vorteilhaft eine Ladeelektronik der Handwerkzeugkofferhaltevorrichtung angeordnet ist. Vorteilhaft ist die Ladefläche eine Außenfläche des Haltevorrichtungsgehäuses. Bevorzugt ist die Kofferstützfläche eine Außenfläche des Haltevorrichtungsgehäuses. Unter einer "Ladeelektronik" soll insbesondere eine Elektronik verstanden werden, die von einem Ladezustand des Handwerkzeugakkus abhängig eine Energieübertragung an den Handwerkzeugakku steuert und/oder vorzugsweise regelt. Vorzugsweise fordert der Handwerkzeugakku von der Ladeelektronik eine Ladeleistung an. Unter einem "Kofferaufnahmebereich" soll insbesondere ein Bereich verstanden werden, in dem der Handwerkzeugkoffer zumindest bei einem Ladevorgang angeordnet ist. Vorzugsweise begrenzt ein Haltevorrichtungsgehäuse der Handwerkzeugkofferhaltevorrichtung den Kofferaufnahmebereich auf zumindest einer Seite, und zwar vorteilhaft auf einer Seite der Ladefläche und insbesondere auf einer Seite der Kofferstützfläche. Insbesondere soll unter einer "Ladespule" eine Spule verstanden werden, die bei einem Ladevorgang eine Energie empfängt und/oder sendet. Vorzugsweise sendet die Ladespule der Handwerkzeugkofferhaltevorrichtung bei einem Ladevorgang eine Energie, die eine in dem Kofferaufnahmebereich angeordnete Ladespule eines Handwerkzeugs und/oder vorteilhaft eines Handwerkzeugakkus empfängt. Vorzugsweise umfasst die Ladespule zumindest eine Spulenwicklung und insbesondere einen Spulenkern. Alternativ oder zusätzlich könnte die Ladespule als Luftspule ausgebildet sein. Vorzugsweise ist die Ladespule als Leiterbahn auf einer Platine oder besonders bevorzugt als eine gewickelte Spule ausgebildet. Unter "vorgesehen" soll insbesondere speziell programmiert, ausgelegt und/oder ausgestattet verstanden werden. Insbesondere soll unter einer "Ladefläche" eine Fläche des Haltevorrichtungsgehäuses verstanden werden, durch die die Ladespule bei einem Ladevorgang eine Energie in Richtung des Kofferaufnahmebereichs überträgt. Vorzugsweise bildet die Ladefläche einen Teil einer Außenseite des Haltevorrichtungsgehäuses. Vorteilhaft erreicht eine die Energie übertragende Feldstärke auf der Ladefläche weniger als 90 % von einer maximalen Feldstärke, die auf einer von der Ladefläche aufgespannten Ebene auftritt. Insbesondere ist die Ladefläche größer als 1 cm², vorteilhaft größer als 5 cm², besonders vorteilhaft größer als 25 cm². Insbesondere soll unter dem Begriff "übertragen" verstanden werden, dass die Ladespule eine elektrische Energie mittels eines magnetischen Wechselfeldes an die in dem Kofferaufnahmebereich angeordnete Ladespule sendet. Vorzugsweise ist die in dem Kofferaufnahmebereich angeordnete Ladespule Teil des Handwerkzeugkoffers und/oder besonders bevorzugt Teil eines in dem Handwerkzeugkoffer angeordneten Handwerkzeugakkus und/oder eines Handwerkzeugs. Unter einer "Kofferstützfläche" soll insbesondere eine Fläche verstanden werden, die in zumindest einem Betriebszustand eine Gewichtskraft des Handwerkzeugkoffers mittels der Stützkraft abstützt, und zwar insbesondere wenn die Ladefläche senkrecht ausgerichtet ist. Des Weiteren begrenzt die Kofferstützfläche vorteilhaft in zumindest einem Betriebszustand eine Bewegung des Handwerkzeugkoffers bei einem Herstellen einer Verbindung zu der Handwerkzeugkofferhaltevorrichtung. Vorzugsweise positioniert die Kofferstützfläche den Handwerkzeugkoffer vor dem Herstellen der Verbindung zu der Handwerkzeugkofferhaltevorrichtung in einer zur Verbindungsherstellung vorgesehenen Position. Vorzugsweise ist die Kofferstützfläche von der Ladefläche beabstandet angeordnet. Vorzugsweise ist die Kofferstützfläche zumindest im Wesentlichen senkrecht zu der Ladefläche ausgerichtet. Insbesondere ist die Kofferstützfläche größer als 1 cm², vorteilhaft größer als 5 cm², besonders vorteilhaft größer als 25 cm². Insbesondere soll unter einer "Stützkraft" eine Kraft verstanden werden, die sich aus den von der Kofferstützfläche auf den Handwerkzeugkoffer wirkenden Kräften zusammensetzt. Vorzugsweise bewirkt die Stützkraft eine Positionierung des Handwerkzeugkoffers. Besonders bevorzugt wirkt die Stützkraft in zumindest einem Betriebszustand einer Gewichtskraft des Handwerkzeugkoffers entgegen. In diesem Zusammenhang soll unter der Wendung "zumindest im Wesentlichen" insbesondere verstanden werden, dass ein Winkel zwischen einer Richtung der Übertragung der Ladespule und einer Senkrechten der Ladefläche bzw. einer Richtung der Stützkraft und einer von der Ladefläche aufgespannten Ebene kleiner als 45 Grad, vorteilhaft kleiner als 30 Grad besonders vorteilhaft kleiner als 15 Grad, ist. Unter "bewirken" soll in diesem Zusammenhang insbesondere verstanden werden, dass die Kofferstützfläche in zumindest einem Betriebszustand eine Kraft auf den Handwerkzeugkoffer ausübt. Durch die erfindungsgemäße Ausgestaltung der Handwerkzeugkofferhaltevorrichtung kann eine besonders stabile Befestigung eines Handwerkzeugkoffers in dem Kofferaufnahmebereich erreicht werden. Des Weiteren ist ein besonders komfortables Positionieren des Handwerkzeugkoffers in einer für einen Ladevorgang und/oder eine Verbindungsherstellung zu der Handwerkzeugkofferhaltevorrichtung optimalen Position möglich.

Ferner wird vorgeschlagen, dass die Kofferstützfläche im Wesentlichen senkrecht zu der Ladefläche ausgerichtet ist, wodurch konstruktiv einfach eine Stützkraft zumindest im Wesentlichen parallel zur Ladefläche bewirkt werden kann.

Zudem wird vorgeschlagen, dass das Haltevorrichtungsgehäuse eine Kofferformschlussfläche aufweist, die dazu vorgesehen ist, eine Kraft zumindest im Wesentlichen senkrecht zu der Ladefläche zu bewirken, wodurch eine besonders zuverlässige Befestigung, insbesondere für einen Einsatz in einem Kraftfahrzeug, möglich ist. Alternativ könnte bei dem Haltevorrichtungsgehäuse auf eine Kofferformschlussfläche verzichtet werden. Insbesondere soll unter einer "Kofferformschlussfläche" eine Fläche verstanden werden, die auf einer der Ladefläche gegenüberliegenden Seite des Kofferaufnahmebereichs angeordnet ist. Vorzugsweise ist die Kofferformschlussfläche dazu vorgesehen, eine Kraft in Richtung der Ladefläche auf den Handwerkzeugkoffer zu bewirken.

Weiterhin wird vorgeschlagen, dass die Handwerkzeugkofferhaltevorrichtung eine von der Kofferstützfläche getrennt ausgebildete Haltevorrichtung aufweist, die dazu vorgesehen ist, einen Handwerkzeugkoffer in den Kofferaufnahmebereich des Haltevorrichtungsgehäuses lösbar zu befestigen, wodurch ein ungewolltes Herausrutschen und/oder Herausfallen des Handwerkzeugkoffers aus dem Kofferaufnahmebereich vermieden werden kann. Insbesondere soll unter der Wendung "getrennt ausgebildet" verstanden werden, dass die Kofferstützfläche und die Haltevorrichtung voneinander beabstandet angeordnet sind. Vorzugsweise ist die Haltevorrichtung an einem die Ladefläche aufspannenden Bereich des Haltevorrichtungsgehäuses angeordnet. Alternativ könnte die Haltevorrichtung von der Ladefläche beabstandet angeordnet sein und/oder insbesondere an einem die Kofferstützfläche aufspannenden Bereich des Haltevorrichtungsgehäuses angeordnet sein. Des Weiteren könnten ein Teil der Haltevorrichtung an dem die Ladefläche aufspannenden Bereich des Haltevorrichtungsgehäuses und ein Teil der Haltevorrichtung an einem die Kofferstützfläche aufspannenden Bereich des Haltevorrichtungsgehäuses abgeordnet sein. Insbesondere ist ein die Ladefläche aufspannender Bereich des Haltevorrichtungsgehäuses dazu vorgesehen, mit einem Befestigungsort, beispielsweise einer Wand, verbunden zu werden. Alternativ könnte ein die Kofferstützfläche aufspannender Bereich des Haltevorrichtungsgehäuses dazu vorgesehen sein, mit dem Befestigungsort verbunden zu werden. Vorzugsweise wirken die Kofferstützfläche und die Haltevorrichtung in zumindest einem Betriebszustand voneinander unabhängig auf den Handwerkzeugkoffer. Unter einer "Haltevorrichtung" soll insbesondere eine Vorrichtung verstanden werden, die dazu vorgesehen ist, in zumindest einem Betriebszustand eine Bewegung des Handwerkzeugkoffers aus dem Kofferaufnahmebereich heraus zu verhindern. Bevorzugt verhindert die Haltevorrichtung in zumindest einem Betriebszustand eine Bewegung des Handwerkzeugkoffers von einer Richtung der Bewegung unabhängig. Vorzugsweise befestigt die Haltevorrichtung den Handwerkzeugkoffer zumindest bei einem Ladevorgang kraftschlüssig und/oder vorteilhaft formschlüssig. Insbesondere soll unter einem "Handwerkzeugkoffer" ein Koffer verstanden werden, der in einem geschlossenen Zustand einen Werkzeugaufnahmebereich stoßgeschützt, feuchtigkeitsgeschützt und/oder staubgeschützt begrenzt. Vorzugsweise begrenzt der Handwerkzeugkoffer den Werkzeugaufnahmebereich zumindest teilweise in Form eines Handwerkzeugackus. Bevorzugt weist der Handwerkzeugkoffer zumindest ein Positionierungs- und/oder Fixierungsmittel zur Positionierung und/oder Fixierung eines Handwerkzeugs, eines Handwerkzeugs mit einem angeschlossenen Handwerkzeugakku und/oder besonders bevorzugt eines Handwerkzeugakkus auf. Vorzugsweise ist der Handwerkzeugkoffer magnetisch und/oder vorteilhaft elektrisch passiv. Insbesondere weist der Handwerkzeugkoffer keine Elektrik auf. Alternativ oder zusätzlich könnte der Handwerkzeugkoffer eine Ladespule und/oder vorteilhaft ein Magnetfeldleiter aufweisen, die/der die Energie empfängt und drahtgebunden und/oder magnetisch an einen Handwerkzeugakku weiterleitet. Vorzugsweise ist der Handwerkzeugkoffer entsprechend des in der Druckschrift DE 10 2008 058 007 B3 vorgeschlagenen Handwerkzeugkoffers ausgebildet, weist jedoch insbesondere einen Handwerkzeugaufnahmebereich und/oder einen Handwerkzeugakkuaufnahmebereich auf, der dazu vorgesehen ist, bei einem Ladevorgang einen induktiv geladenen Handwerkzeugakku aufzunehmen. Insbesondere soll unter dem Begriff "lösbar" verstanden werden, dass die Haltevorrichtung den Handwerkzeugkoffer in einem Zustand befestigt und diese Befestigung in einem anderen Zustand von einem Bediener zerstörungsfrei und/oder reversibel trennbar ist.

In einer vorteilhaften Ausbildung der Erfindung wird vorgeschlagen, dass die Haltevorrichtung zumindest ein, vorzugsweise zwei Haltemittel aufweist, die dazu vorgesehen sind, einen Handwerkzeugkoffer in dem Kofferaufnahmebereich zu verrasten, wodurch konstruktiv einfach eine besonders stabile, benutzerfreundlich lösbare und insbesondere selbsttätig schließende Befestigung möglich ist. Unter einem "Haltemittel" soll insbesondere ein Mittel verstanden werden, dass in zumindest einem Betriebszustand zur Befestigung des Werkzeugkoffers eine Kraft direkt auf den Werkzeugkoffer bewirkt. Vorzugsweise ist das Haltemittel korrespondierend zu einem und/oder gemäß einem in der Druckschrift DE 10 2008 058 007 B3 vorgeschlagenen Haltemittel ausgebildet. Insbesondere soll unter "verrasten" verstanden werden, dass ein Haltemittel bei einem Befestigungsvorgang des Handwerkzeugkoffers elastisch ausgelenkt wird, um anschließend durch eine auf das Haltemittel wirkende Kraft hinter einem korrespondierenden Haltemittel einzuhaken. Vorzugsweise ist das elastisch auslenkbare Haltemittel an dem Handwerkzeugkoffer angeordnet und das korrespondierende Haltemittel an der Handwerkzeugkofferhaltevorrichtung angeordnet.

In einer weiteren Ausgestaltung wird vorgeschlagen, dass die Haltevorrichtung zwei Haltemittel aufweist, die auf zwei gegenüberliegenden Seiten des Kofferaufnahmebereichs angeordnet sind, wodurch konstruktiv einfach eine besonders zuverlässige Befestigung möglich ist. Unter der Wendung "auf zwei gegenüberliegenden Seiten" soll insbesondere verstanden werden, dass die Haltemittel auf einer Geraden liegen, die den Kofferaufnahmebereich schneidet, und die zumindest im Wesentlichen parallel zu einer Seite des Kofferaufnahmebereichs ausgerichtet ist. Vorzugsweise sind die Haltemittel, die dazu vorgesehen sind, einen Handwerkzeugkoffer in dem Kofferaufnahmebereich zu verrasten auf zwei gegenüberliegenden Seiten des Kofferaufnahmebereichs angeordnet.

Des Weiteren wird vorgeschlagen, dass die zwei Haltemittel spiegelsymmetrisch ausgebildet sind, wodurch ein Aufwand bei einer Konstruktion und eine einfache Bedienung möglich sind. Vorzugsweise schneidet eine Symmetrieebene der Haltemittel den Kofferaufnahmebereich insbesondere in dessen Mitte.

Ferner wird vorgeschlagen, dass die Haltevorrichtung werkzeuglos lösbar ausgebildet ist, wodurch ein besonders hoher Bedienkomfort erreicht werden kann. Unter der Wendung "werkzeuglos lösbar" soll insbesondere verstanden werden, dass eine Verbindung der Haltevorrichtung mit dem Handwerkzeugkoffer von einem Bediener mit der Hand lösbar ausgebildet ist. Vorzugsweise weist die Haltevorrichtung zumindest ein Bedienelement auf, das bei einer Betätigung durch einen Bediener eine Befestigung des Handwerkzeugkoffers an der Haltevorrichtung löst.

Zudem wird vorgeschlagen, dass die Ladespule dazu vorgesehen ist, einen in dem Kofferaufnahmebereich angeordneten Handwerkzeugakku zu laden, wodurch mit einer Befestigung des Handwerkzeugkoffers in dem Kofferaufnahmebereich der Akku geschützt und mit geringem Aufwand für den Bediener insbesondere in dem Handwerkzeugkoffer geladen werden kann. Unter einem "Handwerkzeugakku" soll insbesondere ein Akku verstanden werden, der dazu vorgesehen ist, ein insbesondere bei einer vorgesehenen Verwendung werkstückbearbeitendes Handwerkzeug mit einer Energie zu versorgen. Vorzugsweise ist der Akku insbesondere werkzeuglos lösbar mit dem Handwerkzeug verbunden. Alternativ oder zusätzlich könnte ein Handwerkzeugakku in das Handwerkzeug integriert sein. Insbesondere soll unter einem "Handwerkzeug" ein, dem Fachmann als sinnvoll erscheinendes tragbares Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Gartengerät, ein Baustellenmessgerät und/oder ein Multifunktionswerkzeug verstanden werden.

Des Weiteren wird vorgeschlagen, dass die Haltevorrichtung zumindest ein Haltemittel aufweist, das als ein Teil einer formschlüssigen Nut-Feder-Verbindung ausgebildet ist, wodurch eine stabile Befestigung mit einem Geringen Bauraumbedarf möglich ist. Unter einer "formschlüssigen Nut- Feder-Verbindung" soll insbesondere eine Verbindung verstanden werden, bei der eine in eine Nut eingeschobene Feder einen Formschluss senkrecht zu einer Richtung des Einschiebens durch die Nut erfährt.

Ferner wird vorgeschlagen, dass das Haltevorrichtungsgehäuse einen Haltedom aufweist, der dazu vorgesehen ist, einen Handwerkzeugkoffer schwenkbar zu lagern, wodurch eine besonders genaue Positionierung der Ladespule möglich ist. Unter einem "Haltedom" soll insbesondere ein zylinderförmiger Bereich des Haltevorrichtungsgehäuses verstanden werden. Vorzugsweise ist der Haltedom einstückig mit einem Rest des Haltevorrichtungsgehäuses verbunden.

Weiterhin wird ein System mit einer erfindungsgemäßen Handwerkzeugkofferhaltevorrichtung und zumindest einem Handwerkzeugkoffer vorgeschlagen, der zumindest eine zu der Haltevorrichtung der Handwerkzeugkofferhaltevorrichtung korrespondierenden Haltevorrichtung aufweist, wodurch die Handwerkzeugkofferhaltevorrichtung vorteilhaft mit verschiedenen Handwerkzeugkoffern verbindbar ist. In diesem Zusammenhang soll unter "korrespondierend" insbesondere verstanden werden, dass die Haltevorrichtung des Handwerkzeugkoffers dazu vorgesehen ist, mit der Haltevorrichtung der Handwerkzeugkofferhaltevorrichtung eine lösbare mechanische Verbindung einzugehen.

### Zeichnung

Weitere Vorteile ergeben sich aus der folgenden Zeichnungsbeschreibung. In der Zeichnung sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes System mit einem Handwerkzeugkoffer und einer Handwerkzeugkofferhaltevorrichtung, die eine Kofferstützfläche umfasst, die eine Anformung des Handwerkzeugkoffers umgreift,
- Fig. 2: ein alternatives Ausführungsbeispiel des Systems aus Figur 1, wobei eine Kofferstützfläche einer Handwerkzeugkofferhaltevorrichtung eine Seitenwand des Handwerkzeugkoffers umgreift und
- Fig. 3: ein alternatives Ausführungsbeispiel des Systems aus Figur 1, wobei eine Kofferstützfläche einer Handwerkzeugkofferhaltevorrichtung an zwei Seitenwänden des Handwerkzeugkoffers anliegen,
- Fig. 4: ein weiteres alternatives Ausführungsbeispiel des Systems aus Figur 1, wobei der Handwerkzeugkoffer und die Handwerkzeugkofferhaltevorrichtung durch eine formschlüssige Nut-Feder-Verbindung verbunden sind,
- Fig. 5: einen Schnitt durch die Nut-Feder-Verbindung aus Figur 4 ,
- Fig. 6: ein alternatives Ausführungsbeispiel des Systems aus Figur 1, wobei eine Kofferstützfläche an einem Haltedom angeordnet ist,
- Fig. 7: eine Handwerkzeugkofferhaltevorrichtung des Systems aus Figur 5 in einer Draufsicht.

### Beschreibung der Ausführungsbeispiele

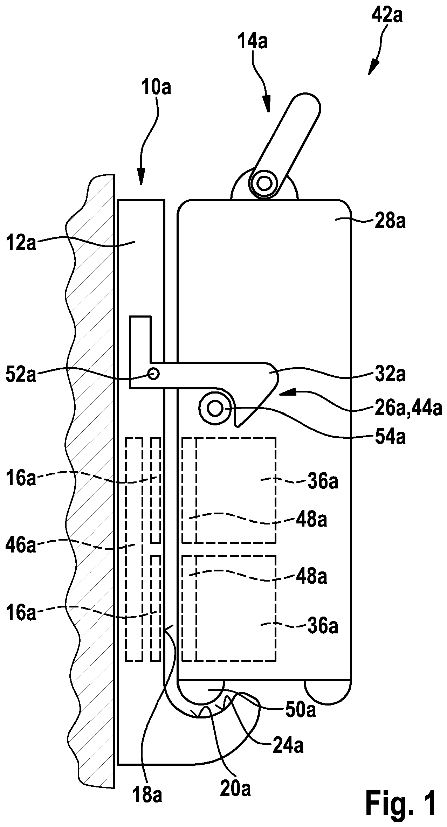

Die Figur 1 zeigt ein System 42a mit einer Handwerkzeugkofferhaltevorrichtung 10a, einem Handwerkzeugkoffer 28a und zwei Handwerkzeugakkus 36a. Die Handwerkzeugkofferhaltevorrichtung 10a weist ein Haltevorrichtungsgehäuse 12a, einen Kofferaufnahmebereich 14a, zwei Ladespulen 16a, eine Kofferstützfläche 20a, eine Haltevorrichtung 26a und eine Ladeelektronik 46a auf. Das Haltevorrichtungsgehäuse 12a verbindet die Ladespulen 16a, die Kofferstützfläche 20a und die Haltevorrichtung 26a miteinander. Es weist einen Innenraum auf, in dem die Ladeelektronik 46a angeordnet ist. Die Handwerkzeugakkus 36a fordern bei einem Ladevorgang eine Ladeleistung bei der Ladeelektronik 46a an. Die Ladeelektronik 46a steuert bei dem Ladevorgang eine an die Handwerkzeugakkus 36a übertragene Ladeleistung. Das Haltevorrichtungsgehäuse 12a umfasst eine Ladefläche 18a, die den Kofferaufnahmebereich 14a teilweise begrenzt.

Die Ladespule 16 ist dazu vorgesehen, einen in dem Kofferaufnahmebereich 14a angeordneten Handwerkzeugakku 36a zu laden. Die Ladespule 16 umfasst hier nicht näher dargestellt eine Spulenwicklung und eine vorzugsweise scheibenförmigen Spulenkern aus Ferrit. Bei einem Ladevorgang überträgt die zumindest eine der Ladespulen 16a die Ladeenergie induktiv durch die Ladefläche 18a in den Kofferaufnahmebereich 14a. Dabei überträgt die Ladespule 16a die Energie in eine Richtung senkrecht zu der Ladefläche 18a des Haltevorrichtungsgehäuses 12a. Die zwei Handwerkzeugakkus 36a sind in dem Handwerkzeugkoffer 28a angeordnet. Der Handwerkzeugkoffer 28a befestigt die Handwerkzeugakkus 36a. Die Handwerkzeugakkus 36a weisen jeweils eine Ladespule 48a auf, die die von der Ladespule 16a der Handwerkzeugkofferhaltevorrichtung 10a gesendete Ladeenergie empfängt. Die Handwerkzeugakkus 36a senden der Ladeelektronik 46a auf eine, dem Fachmann als sinnvoll erscheinende Art, Informationen über ihren Ladezustand.

Das Haltevorrichtungsgehäuse 12a weist eine Kofferstützfläche 20a auf, die dazu vorgesehen ist, eine Stützkraft parallel zu der Ladefläche 18a zu bewirken. Die Kofferstützfläche 20a ist rinnenförmig ausgebildet. Die Kofferstützfläche 20a verläuft parallel zu der Ladefläche 18a. Sie umgreift Standfüße 50a des von der Handwerkzeugkofferhaltevorrichtung 10a befestigten Handwerkzeugkoffers 28a. Das Haltevorrichtungsgehäuse 12a weist eine Kofferformschlussfläche 24a auf, die als ein der Ladefläche 18a zugewandter Bereich der Kofferstützfläche 20a ausgebildet ist. Die Kofferformschlussfläche 24a ist dazu vorgesehen, eine Kraft zumindest im Wesentlichen senkrecht zu der Ladefläche 18a zu bewirken. Somit bewirkt die Kofferformschlussfläche 24a einen Formschluss in eine Richtung senkrecht zu der Ladefläche 18a.

Die Haltevorrichtung 26a der Handwerkzeugkofferhaltevorrichtung 10a ist von der Kofferstützfläche 20a getrennt ausgebildet. Sie ist dazu vorgesehen, den Handwerkzeugkoffer 28a in dem Kofferaufnahmebereich 14a des Haltevorrichtungsgehäuses 12a lösbar zu befestigen. Dazu umfasst die Haltevorrichtung 26a zwei Haltemittel 32a, die zur Befestigung des Handwerkzeugkoffers 28a mit einer Haltevorrichtung 44a des Handwerkzeugkoffers 28a verrasten. Die Haltemittel 32a der Handwerkzeugkofferhaltevorrichtung 10a sind als Rasthaken ausgebildet, die um eine Schwenkachse 52a bewegbar mit dem Haltevorrichtungsgehäuse 12a verbunden sind. Alternativ oder zusätzlich könnten Haltemittel insbesondere mit einer translatorischen Bewegung zur Fixierung verschoben werden. Die Haltemittel 32a der Handwerkzeugkofferhaltevorrichtung 10a sind auf zwei gegenüberliegenden Seiten des Kofferaufnahmebereichs 14a angeordnet. Alternativ oder zusätzlich könnte ein Haltemittel auf einer Griffseite eines Kofferaufnahmebereichs angeordnet sein, die insbesondere einer Kofferstützfläche und/oder einer Kofferformschlussfläche gegenüberliegend angeordnet ist. Die Haltevorrichtung 44a des Handwerkzeugkoffers 28a weist zwei zu den Haltemitteln 32a der Handwerkzeugkofferhaltevorrichtung 10a korrespondierende Haltemittel 54a auf. Die Haltemittel 54a des Handwerkzeugkoffers 28a sind als Erhebungen ausgebildet. Somit ist die Haltevorrichtung 26a der Handwerkzeugkofferhaltevorrichtung 10a werkzeuglos lösbar ausgebildet. Die Haltemittel 32a der Handwerkzeugkofferhaltevorrichtung 10a und die Haltemittel 54a des Handwerkzeugkoffers 28a sind spiegelsymmetrisch zu einer Ebene ausgebildet, die senkrecht zu der Ladefläche 18a ausgerichtet ist.

Bei einem Befestigungsvorgang stellt der Bediener den Handwerkzeugkoffer 28a auf der Kofferstützfläche 20a ab und schwenkt ihn in Richtung der Ladefläche 18a. Die Haltevorrichtung 26a befestigt den Handwerkzeugkoffer 28a in einer dargestellten Stellung, bei der eine Kofferwand des Handwerkzeugkoffers 28a an der Ladefläche 18a anliegt.

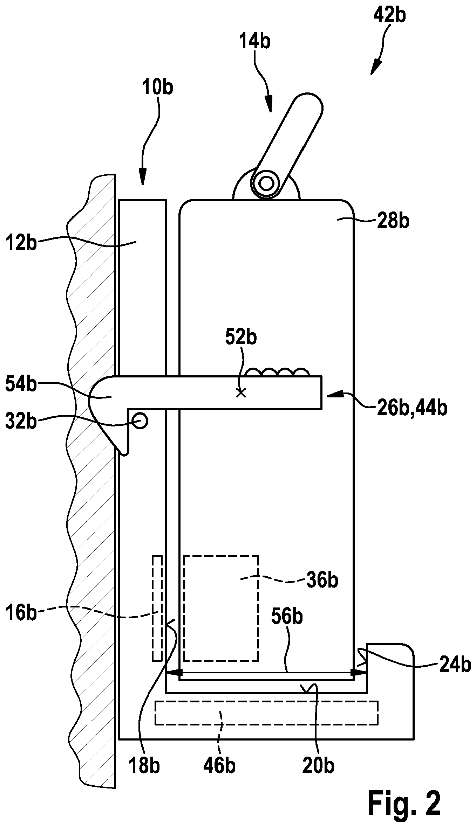

In den Figuren 2 bis 7 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 bis 7 ist der Buchstabe a durch die Buchstaben b bis e ersetzt.

Die Figur 2 zeigt ein weiteres Ausführungsbeispiel eines Systems 42b mit einer Handwerkzeugkofferhaltevorrichtung 10b, einem Handwerkzeugkoffer 28b und einem Handwerkzeugakku 36b. Die Handwerkzeugkofferhaltevorrichtung 10b umfasst ein Haltevorrichtungsgehäuse 12b, einen Kofferaufnahmebereich 14b, eine Ladespule 16b, eine Haltevorrichtung 26b und eine Ladeelektronik 46a. Die Ladespule 16b überträgt bei einem Ladevorgang eine Energie in eine Richtung senkrecht zu einer Ladefläche 18b des Haltevorrichtungsgehäuses 12b, und zwar in den Kofferaufnahmebereich 14b.

Das Haltevorrichtungsgehäuse 12b weist eine Kofferstützfläche 20b auf, die in zumindest einem Betriebszustand eine Stützkraft parallel zu der Ladefläche 18b bewirkt. Die Kofferstützfläche 20b ist senkrecht zu der Ladefläche 18b ausgerichtet. Sie erstreckt sich über eine gesamte Tiefe 56b des Kofferaufnahmebereichs 14b. Eine Kofferformschlussfläche 24b des Haltevorrichtungsgehäuses 12b schließt sich auf einer der Ladefläche 18b abgewandten Seite der Kofferstützfläche 20b an die Kofferstützfläche 20b an. Die Ladefläche 18b und die Kofferstützfläche 20b sind auf einander gegenüberliegenden Seiten des Kofferaufnahmebereichs 14b angeordnet. Die Ladefläche 18b und die Kofferstützfläche 20b sind parallel zueinander ausgerichtet. Die Kofferformschlussfläche 24b bewirkt in zumindest einem Betriebszustand eine Kraft senkrecht zu der Ladefläche 18b auf den Handwerkzeugkoffer 28b. Haltemittel 32b der Haltevorrichtung 26b der Handwerkzeugkofferhaltevorrichtung 10b sind als Erhebungen ausgebildet. Haltemittel 54b einer Haltevorrichtung 44b des Handwerkzeugkoffers 28b sind als Rasthaken ausgebildet, die um eine Schwenkachse 52b bewegbar mit einem Rest des Handwerkzeugkoffers 28b verbunden sind.

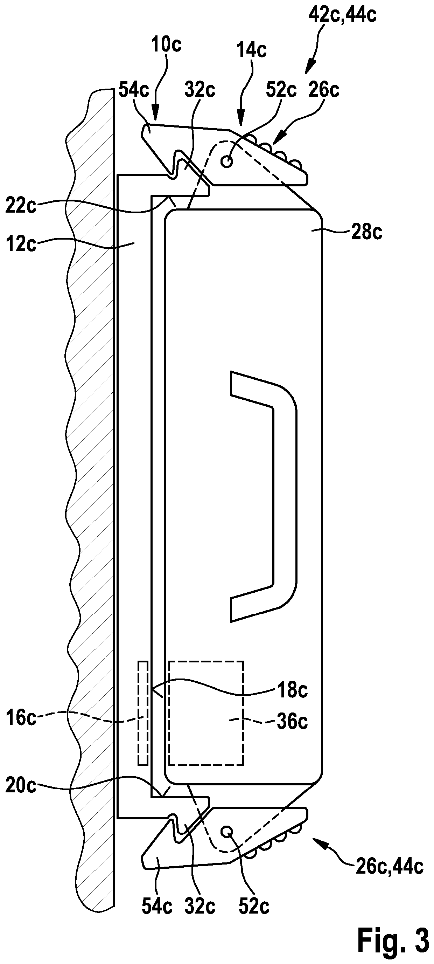

Die Figur 3 zeigt ein weiteres Ausführungsbeispiel eines Systems 42c mit einer Handwerkzeugkofferhaltevorrichtung 10c, einem Handwerkzeugkoffer 28c und einem Handwerkzeugakku 36c. Die Handwerkzeugkofferhaltevorrichtung 10c umfasst ein Haltevorrichtungsgehäuse 12c, einen Kofferaufnahmebereich 14c, eine Ladespule 16c und eine Haltevorrichtung 26c. Die Ladespule 16c überträgt bei einem Ladevorgang eine Energie in eine Richtung senkrecht zu einer Ladefläche 18c des Haltevorrichtungsgehäuses 12c, und zwar in den Kofferaufnahmebereich 14c.

Das Haltevorrichtungsgehäuse 12c weist zwei Kofferstützflächen 20c, 22c auf, die in zumindest einem Betriebszustand eine Stützkraft parallel zu der Ladefläche 18c bewirkt. Die Kofferstützflächen 20c, 22c sind auf zwei gegenüberliegenden Seiten des Kofferaufnahmebereichs 14c angeordnet. Alternativ könnte eine Kofferstützfläche einen Kofferaufnahmebereich auf einer Ebene insbesondere vollständig umschließen. Haltemittel 32c der Haltevorrichtung 26c der Handwerkzeugkofferhaltevorrichtung 10c sind als Erhebungen ausgebildet. Die Haltemittel 32c der Handwerkzeugkofferhaltevorrichtung 10c sind auf den den Kofferstützflächen 20c, 22c abgewandten Seiten des Haltevorrichtungsgehäuses 12c angeordnet. Haltemittel 54c einer Haltevorrichtung 44c des Handwerkzeugkoffers 28c sind als Rasthaken ausgebildet, die um eine Schwenkachse 52c bewegbar mit einem Rest des Handwerkzeugkoffers 28c verbunden sind.

Die Haltemittel 54c des Handwerkzeugkoffers 28c verrasten mit einer Bewegung in Richtung der Ladefläche 18c.

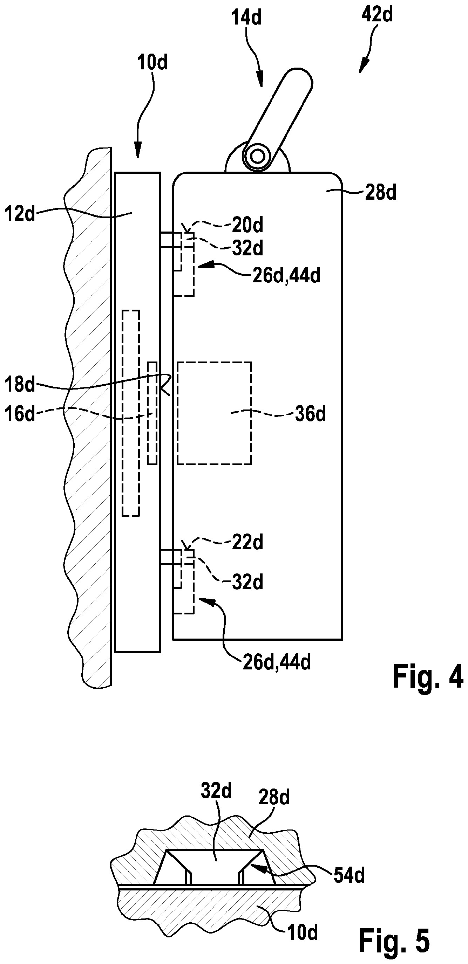

Die Figur 4 zeigt ein weiteres Ausführungsbeispiel eines Systems 42d mit einer Handwerkzeugkofferhaltevorrichtung 10d, einem Handwerkzeugkoffer 28d und einem Handwerkzeugakku 36d. Die Handwerkzeugkofferhaltevorrichtung 10d umfasst ein Haltevorrichtungsgehäuse 12d, einen Kofferaufnahmebereich 14d, eine Ladespule 16d und eine Haltevorrichtung 26d. Die Ladespule 16d überträgt bei einem Ladevorgang eine Energie in eine Richtung senkrecht zu einer Ladefläche 18d des Haltevorrichtungsgehäuses 12d, und zwar in den Kofferaufnahmebereich 14d.

Haltemittel 32d der Haltevorrichtung 26d der Handwerkzeugkofferhaltevorrichtung 10d sind als Federn einer formschlüssigen Nut-Feder-Verbindung ausgebildet. Die Figur 5 zeigt einen Schnitt der Nut-Feder-Verbindung. Die Nut-Feder-Verbindung ist als Schwalbenschwanzverbindung ausgebildet. Alternativ könnte die Nut-Feder-Verbindung als eine andere, dem Fachmann als sinnvoll erscheinende Verbindung ausgebildet sein. Haltemittel 54d einer Haltevorrichtung 44d des Handwerkzeugkoffers 28d sind als Nuten der formschlüssigen Nut-Feder-Verbindung ausgebildet. Die Haltemittel 32d der Handwerkzeugkofferhaltevorrichtung 10d hintergreifen die Haltemittel 54d des Handwerkzeugkoffers 28d formschlüssig. Der Handwerkzeugkoffer 28d wird durch eine Bewegung parallel zu der Ladefläche 18d formschlüssig und werkzeuglos lösbar mit der Handwerkzeugkofferhaltevorrichtung 10d verbunden. Das Haltevorrichtungsgehäuse 12d weist zwei Kofferstützflächen 20d, 22d auf, die in zumindest einem Betriebszustand eine Stützkraft parallel zu der Ladefläche 18d bewirken. Die Kofferstützflächen 20d, 22d sind als Stirnflächen der Haltemittel 32d ausgebildet und in einem verbundenen Betriebszustand in der Nut angeordnet. Die Kofferstützflächen 20d, 22d sind senkrecht zu einer Richtung ausgerichtet, mit der der Handwerkzeugkoffer 28d befestigt wird.

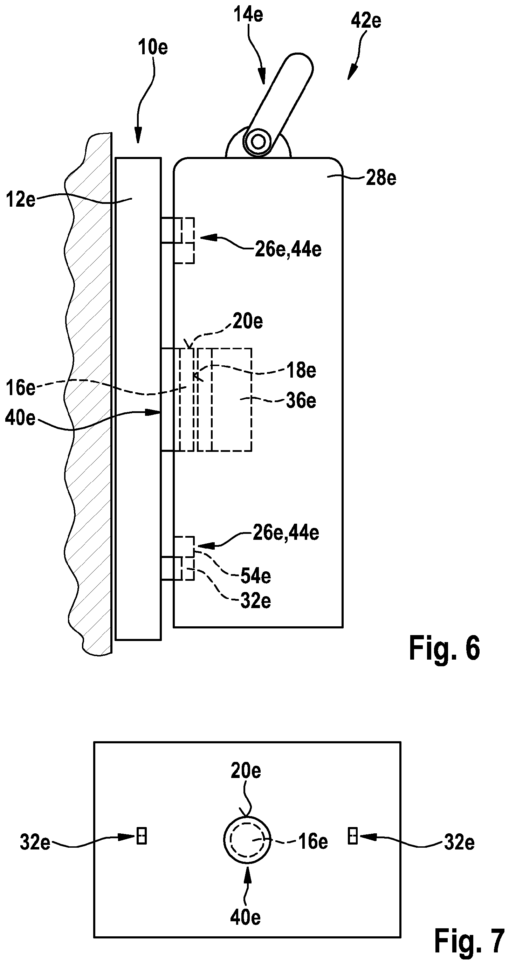

Die Figuren 6 und 7 zeigen ein weiteres Ausführungsbeispiel eines Systems 42e mit einer Handwerkzeugkofferhaltevorrichtung 10e, einem Handwerkzeugkoffer 28e und einem Handwerkzeugakku 36e. Die Handwerkzeugkofferhaltevorrichtung 10e umfasst ein Haltevorrichtungsgehäuse 12e, einen Kofferaufnahmebereich 14e, eine Ladespule 16e und eine Haltevorrichtung 26e. Die Ladespule 16e überträgt bei einem Ladevorgang eine Energie in eine Richtung senkrecht zu einer Ladefläche 18e des Haltevorrichtungsgehäuses 12e, und zwar in den Kofferaufnahmebereich 14e.

Das Haltevorrichtungsgehäuse 12e weist eine Kofferstützfläche 20e auf, die in zumindest einem Betriebszustand eine Stützkraft parallel zu der Ladefläche 18e bewirkt. Die Kofferstützflächen 20e sind an einem Haltedom 40e des Haltevorrichtungsgehäuses 12e angeordnet, der dazu vorgesehen ist, einen Handwerkzeugkoffer 28e schwenkbar zu lagern. Die Kofferstützfläche 20e wird von einer Mantelfläche des Haltedoms 40e gebildet. Des Weiteren weist die Handwerkzeugkofferhaltevorrichtung 10e eine Haltevorrichtung 26e mit zwei Haltemitteln 32e auf. Die Haltemittel 32e sind als Formschlusshaken ausgebildet. Zur Befestigung des Handwerkzeugkoffers 28e wird der Handwerkzeugkoffer 28e auf den Haltedom 40e aufgesetzt und auf dem Haltedom 40e in eine Befestigungsstellung geschwenkt. Dabei greifen die Haltemittel 32e der Handwerkzeugkofferhaltevorrichtung 10e hinter Haltemittel 54e einer Haltevorrichtung 44e des Handwerkzeugkoffers 28e, die als Formschlussrippen ausgebildet sind. Die Ladespule 16e ist in dem Haltedom 40e angeordnet. Die Ladefläche 18e ist als eine Stirnfläche des Haltedoms 40e ausgebildet.

Der Übersichtlichkeit halber sind die Handwerkzeugkofferhaltevorrichtungen 10a-e und der Handwerkzeugkoffer 28a-e in den Figuren 1 bis 6 an Flächen 18a-e, 20a-e, 22c-d, 24a; 24b voneinander beabstandet dargestellt, die bei einer erfindungsgemäßen Ausgestaltung aneinander anliegen, wenn der Handwerkzeugkoffer 28a-e von der Handwerkzeugkofferhaltevorrichtung 10a-e befestigt ist.

## Patentansprüche

1. Handwerkzeugkofferhaltevorrichtung mit einem Haltevorrichtungsgehäuse (12a-e), einem Kofferaufnahmebereich (14a-e) und zumindest einer Ladespule (16a-e), die dazu vorgesehen ist, in eine Richtung senkrecht zu einer Ladefläche (18a-e) des Haltevorrichtungsgehäuses (12a-e) eine Energie in den Kofferaufnahmebereich (14a-e) zu übertragen, **dadurch gekennzeichnet, dass** das Haltevorrichtungsgehäuse (12a-e) eine Kofferstützfläche (20a-e, 22c-d) aufweist, die dazu vorgesehen ist, eine Stützkraft zumindest im Wesentlichen parallel zu der Ladefläche (18a-e) zu bewirken.

2. Handwerkzeugkofferhaltevorrichtung nach Anspruch 1, **dadurch gekennzeichnet, dass** die Kofferstützfläche (20b-e; 22c-d) im Wesentlichen senkrecht zu der Ladefläche (18b-e) ausgerichtet ist.

3. Handwerkzeugkofferhaltevorrichtung nach Anspruch 1 oder 2, **dadurch gekennzeichnet, dass** das Haltevorrichtungsgehäuse (12a; 12b; 12d; 12e) eine Kofferformschlussfläche (24a; 24b) aufweist, die dazu vorgesehen ist, eine Kraft zumindest im Wesentlichen senkrecht zu der Ladefläche (18a; 18b; 18d; 18e) zu bewirken.

4. Handwerkzeugkofferhaltevorrichtung nach einem der vorhergehenden Ansprüche, **gekennzeichnet durch** eine von der Kofferstützfläche (20a-c; 22c; 20e) getrennt ausgebildete Haltevorrichtung (26a-c; 26e), die dazu vorgesehen ist, einen Handwerkzeugkoffer (28a-c; 28e) in den Kofferaufnahmebereich (14a-c; 14e) des Haltevorrichtungsgehäuses (12a-c; 12e) lösbar zu befestigen.

5. Handwerkzeugkofferhaltevorrichtung nach Anspruch 4, **dadurch gekennzeichnet, dass** die Haltevorrichtung (26a-c) zumindest ein Haltemittel (32a-c) aufweist, das dazu vorgesehen ist, einen Handwerkzeugkoffer (28a-c) in dem Kofferaufnahmebereich (14a-c) zu verrasten.

6. Handwerkzeugkofferhaltevorrichtung zumindest nach Anspruch 4, **dadurch gekennzeichnet, dass** die Haltevorrichtung (26a-c) zwei Haltemittel (32a-c) aufweist, die auf zwei gegenüberliegenden Seiten des Kofferaufnahmebereichs (14a-c) angeordnet sind.

7. Handwerkzeugkofferhaltevorrichtung zumindest nach Anspruch 4, **dadurch gekennzeichnet, dass** die zwei Haltemittel (32a-c) spiegelsymmetrisch ausgebildet sind.

8. Handwerkzeugkofferhaltevorrichtung zumindest nach Anspruch 4, **dadurch gekennzeichnet, dass** die Haltevorrichtung (26a-e), werkzeuglos lösbar ausgebildet ist.

9. Handwerkzeugkofferhaltevorrichtung nach einem der vorhergehenden Ansprüche, **dadurch gekennzeichnet, dass** die Ladespule (16a-e) dazu vorgesehen ist, einen in dem Kofferaufnahmebereich (14a-e) angeordneten Handwerkzeugakku (36a-e) zu laden.

10. Handwerkzeugkofferhaltevorrichtung nach einem der vorhergehenden Ansprüche, **dadurch gekennzeichnet, dass** die Haltevorrichtung (26d), zumindest ein Haltemittel (32d) aufweist, das als ein Teil einer formschlüssigen Nut-Feder-Verbindung ausgebildet ist.

11. Handwerkzeugkofferhaltevorrichtung nach einem der vorhergehenden Ansprüche, **dadurch gekennzeichnet, dass** das Haltevorrichtungsgehäuse (12e), einen Haltedom (40e) aufweist, der dazu vorgesehen ist, einen Handwerkzeugkoffer (28e) schwenkbar zu lagern.

12. System mit einer Handwerkzeugkofferhaltevorrichtung (10a-e) nach einem der vorhergehenden Ansprüche und zumindest mit einem Handwerkzeugkoffer (28a-e), der zumindest eine zu der Haltevorrichtung (26a-e) der Handwerkzeugkofferhaltevorrichtung (10a-e) korrespondierende Haltevorrichtung (44a-e) aufweist.

## Claims

1. Hand-tool-case retaining device having a retaining-device housing (12a-e), having a case-accommodating region (14a-e) and having at least one charging coil (16a-e), which is provided to transmit energy into the case-accommodating region (14a-e) in a direction perpendicular to a charging surface (18a-e) of the retaining-device housing (12a-e), **characterized in that** the retaining-device housing (12a-e) has a case-supporting surface (20a-e, 22c-d), which is provided to create a supporting force at least essentially parallel to the charging surface (18a-e) .

2. Hand-tool-case retaining device according to Claim 1, **characterized in that** the case-supporting surface (20b-e; 22c-d) is oriented essentially perpendicularly to the charging surface (18b-e).

3. Hand-tool-case retaining device according to Claim 1 or 2, **characterized in that** the retaining-device housing (12a; 12b; 12d; 12e) has a form-fitting case surface (24a; 24b), which is provided to create a force at least essentially perpendicularly to the charging surface (18a; 18b; 18d; 18e).

4. Hand-tool-case retaining device according to one of the preceding claims, **characterized by** a retaining device (26a-c; 26e) which is formed separately from the case-supporting surface (20a-c; 22c; 20e) and is provided to fasten a hand-tool case (28a-c; 28e) in a releasable manner in the case-accommodating region (14a-c; 14e) of the retaining-device housing (12a-c; 12e).

5. Hand-tool-case retaining device according to Claim 4, **characterized in that** the retaining device (26a-c) has at least one retaining means (32a-c) which is provided to latch a hand-tool case (28a-c) in the case-accommodating region (14a-c).

6. Hand-tool-case retaining device at least according to Claim 4, **characterized in that** the retaining device (26a-c) has two retaining means (32a-c) which are arranged on two opposite sides of the case-accommodating region (14a-c).

7. Hand-tool-case retaining device at least according to Claim 4, **characterized in that** the two retaining means (32a-c) are of mirror-symmetrical design.

8. Hand-tool-case retaining device at least according to Claim 4, **characterized in that** the retaining device (26a-e) is designed for release without tools being required.

9. Hand-tool-case retaining device according to one of the preceding claims, **characterized in that** the charging coil (16a-e) is provided to charge a hand-tool battery (36a-e) arranged in the case-accommodating region (14a-e).

10. Hand-tool-case retaining device according to one of the preceding claims, **characterized in that** the retaining device (26d) has at least one retaining means (32d) which is designed in the form of part of a form-fitting groove/tongue connection.

11. Hand-tool-case retaining device according to one of the preceding claims, **characterized in that** the retaining-device housing (12e) has a retaining mandrel (40e), which is provided to mount a hand-tool case (28e) in a pivotable manner.

12. System having a hand-tool-case retaining device (10a-e) according to one of the preceding claims, and at least having a hand-tool case (28a-e) which has at least one retaining device (44a-e) corresponding to the retaining device (26a-e) of the hand-tool-case retaining device (10a-e).

## Revendications

1. Dispositif de fixation pour mallette d'outil à main avec un boîtier de dispositif de fixation (12a-e), une région de logement de mallette (14a-e) et au moins une bobine de chargement (16a-e), qui est prévue pour transférer une énergie dans la région de logement de mallette (14a-e) dans une direction perpendiculaire à une face de chargement (18a-e) du boîtier de dispositif de fixation (12a-e), **caractérisé en ce que** le boîtier de dispositif de fixation (12a-e) présente une face d'appui de mallette (20a-e, 22c-d), qui est prévue pour produire une force d'appui au moins essentiellement parallèle à la face de chargement (18a-e).

2. Dispositif de fixation pour mallette d'outil à main selon la revendication 1, **caractérisé en ce que** la face d'appui de mallette (20b-e, 22c-d) est essentiellement perpendiculaire à la face de chargement (18b-e).

3. Dispositif de fixation pour mallette d'outil à main selon une revendication 1 ou 2, **caractérisé en ce que** le boîtier de dispositif de fixation (12a; 12b; 12d; 12e) présente une face d'emboîtement de mallette (24a; 24b), qui est prévue pour produire une force au moins essentiellement perpendiculaire à la face de chargement (18a; 18b; 18d; 18e).

4. Dispositif de fixation pour mallette d'outil à main selon l'une quelconque des revendications précédentes, **caractérisé par** un dispositif de fixation (26a-c; 26e) réalisé séparément de la face d'appui de mallette (20a-c; 22c; 20e), qui est prévu pour fixer de manière amovible une mallette d'outil à main (28a-c; 28e) dans la région de logement de mallette (14a-c; 14e) du boîtier de dispositif de fixation (12a-c; 12e).

5. Dispositif de fixation pour mallette d'outil à main selon la revendication 4, **caractérisé en ce que** le dispositif de fixation (26a-c) présente au moins un moyen de fixation (32a-c), qui est prévu pour encliqueter une mallette d'outil à main (28a-c) dans la région de logement de mallette (14a-c).

6. Dispositif de fixation pour mallette d'outil à main au moins selon la revendication 4, **caractérisé en ce que** le dispositif de fixation (26a-c) présente deux moyens de fixation (32a-c), qui sont disposés sur deux côtés opposés de la région de logement de mallette (14a-c).

7. Dispositif de fixation pour mallette d'outil à main au moins selon la revendication 4, **caractérisé en ce que** les deux moyens de fixation (32a-c) sont réalisés de façon symétrique par réflexion.

8. Dispositif de fixation pour mallette d'outil à main au moins selon la revendication 4, **caractérisé en ce que** le dispositif de fixation (26a-e) est réalisé de façon séparable sans outil.

9. Dispositif de fixation pour mallette d'outil à main selon l'une quelconque des revendications précédentes, **caractérisé en ce que** la bobine de chargement (16a-e) est prévue pour charger un accu d'outil à main (36a-e) disposé dans la région de logement de mallette (14a-e).

10. Dispositif de fixation pour mallette d'outil à main selon l'une quelconque des revendications précédentes, **caractérisé en ce que** le dispositif de fixation (26d) présente au moins un moyen de fixation (32d), qui est réalisé comme une partie d'un assemblage à rainure et languette à emboîtement.

11. Dispositif de fixation pour mallette d'outil à main selon l'une quelconque des revendications précédentes, **caractérisé en ce que** le boîtier de dispositif de fixation (12e) présente un dôme de fixation (40e), qui est prévu pour supporter de façon pivotante une mallette d'outil à main (28e).

12. Système avec un dispositif de fixation pour mallette d'outil à main (10a-e) selon l'une quelconque des revendications précédentes et au moins avec une mallette d'outil à main (28a-e), qui présente au moins un dispositif de fixation (44a-e) correspondant au dispositif de fixation (26a-e) du dispositif de fixation pour mallette d'outil à main (10a-e).
